# EUROPÄISCHE PATENTSCHRIFT

(11) **EP 4 093 176 B1**
(45) Veröffentlichungstag und Bekanntmachung des Hinweises auf die Patenterteilung: **09.10.2024**
(21) Anmeldenummer: 21703593.0
(22) Anmeldetag: 22.01.2021
(51) Int. Cl.: A01B 63/10

(54) **LANDWIRTSCHAFTLICHE MASCHINE SOWIE VERFAHREN ZUM BETREIBEN EINER LANDWIRTSCHAFTLICHEN MASCHINE**
AGRICULTURAL MACHINE AND METHOD FOR OPERATING AN AGRICULTURAL MACHINE
ENGIN AGRICOLE ET SON PROCÉDÉ DE FONCTIONNEMENT

(30) Priorität: 24.01.2020 DE 102020101742
(43) Veröffentlichungstag der Anmeldung: 30.11.2022
(73) Patentinhaber: Lemken GmbH & Co KG, 46519 Alpen (DE)
(72) Erfinder: OSSING, Roman, 46348 Raesfeld (DE)
(86) Internationale Anmeldenummer: PCT/DE2021/100066
(87) Internationale Veröffentlichungsnummer: WO 2021/148089

(56) Entgegenhaltungen:
- EP-A2- 2 524 585
- DE-A1- 3 337 789
- DE-A1- 4 311 275
- DE-C1- 4 304 133
- US-A- 4 292 884
- US-A- 4 463 658

## Beschreibung

Die vorliegende Erfindung betrifft eine landwirtschaftliche Maschine gemäß dem Oberbegriff des Anspruchs 1. Weiterhin betrifft die vorliegende Erfindung ein Verfahren zum Betreiben einer landschaftlichen Maschine gemäß dem Oberbegriff des nebengeordneten Anspruches 7.

Eine landwirtschaftliche Maschine, insbesondere eine Maschine zur Bodenbearbeitung, Aussaat oder dergleichen, ist aus der EP 2 080 428 A1 bekannt. Die landwirtschaftliche Maschine weist zumindest eine hydraulischen Stelleinrichtung auf, die zumindest einen Hydraulikzylinder umfasst. Mittels der Stelleinrichtung lässt sich zumindest eine Komponente der Maschine aus einer ersten Position, in der diese beispielsweise parallel zum Boden geführt werden oder mit dem Boden in Eingriff stehen und durch die hydraulische Stelleinrichtung mit einer vorgebbaren Kraft beaufschlagt wird, in eine zweite Position, in der die Komponente zum Boden beabstandet ist, überführen. Dies ist insbesondere bei einer Vorgewendefahrt relevant. Dabei ist die Stelleinrichtung mit einem Hydraulikverteiler hydraulisch verbunden, mit welchem zur Beaufschlagung der Stelleinrichtung ein hydraulischer Druck einstellbar und/oder ein Volumenstrom zu- oder abführbar ist. Um eine Überführung aus der ersten Position in die zweite Position zu erkennen, ist ein Überwachungssystem vorgesehen, welches zumindest zwei Sensoren umfasst, welche einen Druck und/oder einen Volumenstrom, der von dem Hydraulikverteiler zur Beaufschlagung der Stelleinrichtung bereitgestellt wird, messen. Der landschaftlichen Maschine ist eine Steuereinheit zugeordnet, welche dazu eingerichtet ist, die Signale der zumindest zwei Sensoren auszuwerten, um zu erkennen, dass eine Überführung aus der ersten Position in die zweite Position durch eine entsprechende Beaufschlagung des zumindest einen Hydraulikzylinders erfolgen soll. Weitere landwirtschaftliche Maschinen mit Stelleinrichtungen sind aus den Dokumenten DE 33 37 789 A1, DE 43 04 133 C1, EP 2 524 585 A2, US 4 292 884 A, US 4 463 658 A und DE 43 11 275 A1 bekannt.

Ausgehend von dem vorstehend genannten Stand der Technik liegt der Erfindung die Aufgabe zugrunde, eine landwirtschaftliche Maschine sowie ein Verfahren zum Betreiben einer landschaftlichen Maschine der eingangs genannten Art derart weiterzubilden, dass diese sich durch eine vereinfachte Ansteuerung auszeichnen.

Diese Aufgabe wird von einer landschaftlichen Maschine gemäß dem Oberbegriff des Anspruches 1 in Verbindung mit dessen kennzeichnenden Merkmalen gelöst. Aus verfahrenstechnischer Sicht erfolgt eine Lösung der Aufgabe durch die technischen Merkmale des nebengeordneten Anspruchs 7.

Gemäß der Erfindung wird eine landwirtschaftliche Maschine vorgeschlagen, mit zumindest einer hydraulischen Stelleinrichtung,
- wobei die Stelleinrichtung zumindest einen Hydraulikzylinder umfasst,
- wobei die Stelleinrichtung mit einer Regeleinheit hydraulisch verbunden ist, mit welcher zur Beaufschlagung der Stelleinrichtung ein erster hydraulischer Druck einstellbar und/oder ein erster Volumenstrom zu- oder abführbar ist, mit dem die Stelleinrichtung in eine erste Position überführbar ist,
- wobei die Stelleinrichtung zudem mit einer Betätigungseinheit hydraulisch verbunden ist, mit welcher zur Beaufschlagung der Stelleinrichtung ein zweiter hydraulischer Druck einstellbar und/oder ein zweiter Volumenstrom zur Übersteuerung der Regeleinheit zu- oder abführbar ist, mit dem die Stelleinrichtung in eine zweite Position überführbar ist. Erfindungsgemäß ist vorgesehen, dass in der hydraulischen Verbindung zwischen Stelleinrichtung und Regeleinheit ein Sicherungsmittel, das als Leitungsbruchsicherungsventil ausgebildet ist, mit einer einen hydraulischen Druck oder einen Volumenstrom begrenzenden oder blockierenden Wirkung angeordnet ist, wobei die begrenzende oder blockierende Wirkung des Sicherungsmittels bei Betätigung der Betätigungseinheit eintritt oder aktivierbar ist. Bei einer Betätigung der Betätigungseinheit kommt es zu der Übersteuerung der Regeleinheit, was zu einer Überführung des zumindest einen Hydraulikzylinders der Stelleinrichtung von der ersten Position in die zweite Position führt. Die daraufhin einsetzende begrenzende oder blockierende Wirkung des Sicherungsmittels führt dazu, dass ein vor dem zumindest begrenzend wirkenden Sicherungsmittel auftretender Staudruck ausreicht, um den zumindest einen Hydraulikzylinder aus seiner ersten Position in seine zweite Position zu überführen. Eine blockierende Wirkung des Sicherungsmittels führt dazu, dass kein Hydraulikmedium über die Regeleinheit abfließen kann. Es bedarf hierfür keiner sensorischen Überwachung des Druckes und/oder des Volumenstroms durch eine entsprechende Sensorik. Damit verbunden entfällt die signaltechnische Anbindung der Sensorik an eine Steuereinheit zur Übertragung der Signale sowie deren Auswertung durch die Steuereinheit. Die landwirtschaftliche Maschine zeichnet sich erfindungsgemäß somit gegenüber dem Stand der Technik durch einen vereinfachten Aufbau und eine vereinfachte Ansteuerung aus. So ist genau ein Sicherungsmittel vorgesehen, um eine Zustandsänderung der Stelleinrichtung zu bewirken. Die alleine durch die Betätigung der Betätigungseinheit hervorgerufene Änderung eines Druckes und/oder eines Volumenstroms führt zum unmittelbaren Eintreten oder Aktivieren der begrenzenden oder blockierenden Wirkung des Sicherungsmittels. Der zumindest eine Hydraulikzylinder der Stelleinrichtung ist insbesondere als doppeltwirkender Hydraulikzylinder ausgeführt.

Bevorzugt kann der durch die Regeleinheit zur Beaufschlagung der Stelleinrichtung eingestellte erste Druck und/oder der erste zu- oder abgeführte Volumenstrom derart bemessen sein, dass dieser den durch die Betätigungseinheit zur Beaufschlagung der Stelleinrichtung eingestellten zweiten Druck und/oder den zu- oder abgeführten zweiten Volumenstrom unterschreitet.

Gemäß einer nicht beanspruchten Ausführungsform kann das Sicherungsmittel als hydraulische Drossel, oder einstellbare Drossel oder als Drosselrückschlagventil ausgebildet sein. Es ist lediglich ein Bauteil erforderlich, um den gleichen Steuerungs- oder Regelungseffekt zu erreichen, wie er aus dem Stand der Technik bekannt ist.

Bei der Ausführung des Sicherungsmittels als hydraulische Drossel, insbesondere als ein Leitungsabschnitt mit reduziertem Querschnitt, der eine druckbeaufschlagbare Seite des zumindest einen Hydraulikzylinders mit der Regeleinheit hydraulisch verbindet, ist die Dimensionierung der Reduzierung des Leitungsabschnitts derart gewählt, dass bei einer Betätigung der Betätigungseinheit zur Beaufschlagung der Stelleinrichtung mit dem zweiten Druck und/oder dem zuführten zweiten Volumenstrom der auftretende Staudruck vor der Querschnittreduzierung ausreicht, um den zumindest einen Hydraulikzylinder in seien zweite Position zu überführen. Um den zumindest einen Hydraulikzylinder in der zweiten Position zu halten, ist es im Fall der Ausführung des Sicherungsmittels als ein Leitungsabschnitt mit reduziertem Querschnitt erforderlich, den zweiten Druck und/oder den zugeführten zweiten Volumenstrom aufrecht zu erhalten. Entsprechendes gilt bei der alternativen Ausführung des Sicherungsmittels als Drosselrückschlagventil. Letzteres hat gegenüber der hydraulischen Drossel den Vorteil, dass es lediglich in einer Richtung drosselt und in der anderen Richtung das Medium ungedrosselt durchfließen lässt.

Bei der Betätigung der Betätigungseinheit zur Beaufschlagung der Stelleinrichtung mit dem zweiten Druck und/oder dem zugeführten zweiten Volumenstrom wird im Fall des als Leitungsbruchsicherungsventil ausgeführten Sicherungsmittels erreicht, dass bei einem Überschreiten eines Schwellwertes für den zweiten Druck oder den zweiten Volumenstrom das Leitungsbruchsicherungsventil schließt. In dieser Schaltstellung des Leitungsbruchsicherungsventils kann kein Medium über die Regeleinheit abfließen. Dadurch kann die zweite Position des zumindest einen Hydraulikzylinders gehalten werden, ohne dass es einer permanenten Beaufschlagung mit dem zweiten Druck und dem zweiten Volumenstrom bedarf.

Des Weiteren kann die Regeleinheit zumindest mittelbar mit einer hydraulischen Pumpe und einem Reservoir zur kontinuierlichen Beaufschlagung mit dem ersten Druck und/oder der Zu- und Abfuhr des ersten Volumenstromes verbunden sein. Hierdurch kann der zumindest eine Hydraulikzylinder der Stelleinrichtung in seiner ersten Position gehalten werden. Die Regeleinheit kann hierzu zwei Druckbegrenzungsventile umfassen. Die erste Position der Stelleinrichtung kann eine Arbeitsposition sein, in der durch die Stelleinrichtung betätigbare Komponenten der landwirtschaftlichen Maschine beispielsweise parallel zum Boden geführt werden und/oder mit dem Boden in Eingriff stehen. Die zweite Position kann bei einer Vorgewendefahrt eingenommen werden, in der die Komponenten zum Boden beabstandet sind. Im Betrieb der Stelleinrichtung in der ersten Position kann die Regeleinheit auf die Gewichtskraft der landwirtschaftlichen Maschine bzw. der durch die Stelleinrichtung zu betätigenden Komponenten eingestellt sein.

Weiterhin kann die Betätigungseinheit zumindest mittelbar mit einer hydraulischen Pumpe und einem Reservoir zur manuellen Beaufschlagung mit dem zweiten Druck und/oder der Zu- und Abfuhr des zweiten Volumenstromes verbunden sein.

Eine mittelbare Verbindung kann dadurch gegeben sein, dass sich Pumpe und Reservoir auf einem die landwirtschaftliche Maschine mitführenden landwirtschaftlichen Arbeitsfahrzeug wie einem Traktor befinden.

Vorzugsweise kann der Maschine eine Steuereinheit zugeordnet sein, welche der Ansteuerung der Betätigungseinheit dient. Hierbei kann die Steuereinheit dazu eingerichtet sein, die Beaufschlagung des als hydraulische Drossel oder als Drosselrückschlagventil ausgeführten Sicherungsmittels mit dem zweiten Druck und/oder dem zweiten Volumenstrom nach der Betätigung der Betätigungseinheit automatisch aufrecht zu erhalten, bis eine erneute Betätigung der Betätigungseinheit eine Überführung der Stelleinrichtung von der zweiten Position in die erste Position an die Steuereinheit signalisiert.

Bevorzugt kann die zumindest eine Stelleinrichtung zum Überführen zumindest eines an der landwirtschaftlichen Maschine angeordneten Gerätesegmentes zwischen einer Betriebsstellung und einer ausgehobenen Stellung eingerichtet sein.

Weiterhin wird die eingangs gestellte Aufgabe durch ein Verfahren zum Betreiben einer landwirtschaftlichen Maschine mit den Merkmalen des nebengeordneten Anspruches 7 gelöst.

Gemäß dem Anspruch 7 wird ein Verfahren zum Betreiben einer landwirtschaftliche, Maschine vorgeschlagen, mit zumindest einer hydraulischen Stelleinrichtung zum Überführen wenigstens eines an der landwirtschaftliche Maschine angeordneten Gerätesegmentes von einer ersten Position in eine zweite Position, wobei die Stelleinrichtung zumindest einen Hydraulikzylinder umfasst, wobei die Stelleinrichtung mit einer Regeleinheit hydraulisch verbunden ist, mit welcher zur Beaufschlagung der Stelleinrichtung ein erster hydraulischer Druck eingestellt und/oder ein erster Volumenstrom zu- oder abgeführt wird, mit dem die Stelleinrichtung in die erste Position überführt wird, wobei die Stelleinrichtung zudem mit einer Betätigungseinheit hydraulisch verbunden ist, mit welcher zur Beaufschlagung der Stelleinrichtung ein zweiter hydraulischer Druck eingestellt und/oder ein zweiter Volumenstrom zur Übersteuerung der Regeleinheit zu- oder abgeführt wird, mit dem die Stelleinrichtung in die zweite Position überführt wird, wobei bei einer Betätigung der Betätigungseinheit ein in der hydraulischen Verbindung zwischen Stelleinrichtung und Regeleinheit angeordnetes Sicherungsmittel, durch welches ein hydraulischer Druck oder ein Volumenstrom begrenzt oder blockiert wird, aktiviert wird. Der erfindungsgemäße Effekt besteht darin, dass eine Begrenzung oder Blockierung eines hydraulischen Drucks oder eines Volumenstroms durch genau ein in der hydraulischen Verbindung zwischen Stelleinrichtung und Regeleinheit angeordnetes Sicherungsmittel erreicht wird, welches unmittelbar durch die Betätigung der Betätigungseinheit aktiviert wird bzw. dessen begrenzende oder blockierende Wirkung durch die Betätigung der Betätigungseinheit eintritt.

Dabei ist beim Betrieb der Maschine das als Leitungsbruchsicherungsventil ausgeführte Sicherungsmittel bei Volumenströmen unterhalb eines Schwellwertes in einer geöffneten Stellung gehalten. Erst mit dem Passieren eines Schwellwertes wird der erste Volumenstrom im Fall des Leitungsbruchsicherungsventils unterbrochen, was beim Ausheben des Gerätesegmentes der Fall ist.

Bevorzugt kann beim Betrieb der Maschine das als einstellbare Drossel, als Drosselrückschlagventil oder als Leitungsbruchsicherungsventil ausgeführte Sicherungsmittel bei Volumenströmen unterhalb eines Schwellwertes in einer geöffneten Stellung gehalten werden, in der die Stelleinrichtung in der ersten Position gehalten wird, und beim Ausheben des Gerätesegmentes, d.h. beim Überführen in die zweite Position, kann die hydraulische Verbindung der Regeleinheit mit einer Pumpe oder einem Reservoir durch das Sicherungsmittel begrenzt oder unterbrochen werden. Die Ausführung des Sicherungsmittels als Drosselrückschlagventil oder als Drossel ist nicht beansprucht.

Insbesondere kann durch eine der Maschine zugeordnete Steuereinheit zumindest die Betätigungseinheit angesteuert werden, um das Gerätesegment zwischen der ersten Position und der zweiten Position zu überführen. Dazu kann die Betätigungseinheit durch die Steuereinheit angesteuert werden, um einen erforderlichen zweiten Druck und/oder einen zweiten Volumenstrom aufrecht zu erhalten, wenn die hydraulische Verbindung zwischen der Stelleinrichtung und der Regeleinheit durch das Sicherungsmittel nur begrenzt wird. Dies ist dann der Fall, wenn das Sicherungsmittel als hydraulische Drossel oder als Drosselrückschlagventil ausgeführt wird. Bei einer Ausführung des Sicherungsmittels als ein Leitungsbruchsicherungsventil kann die Ansteuerung der Betätigungseinheit durch die Steuereinheit entfallen, da ein Abfließen des Mediums in der als zumindest ein Hydraulikzylinder ausgeführten Stelleinrichtung über die Regeleinheit blockiert wird.

Die vorliegende Erfindung wird nachstehend anhand von in den Zeichnungen dargestellten Ausführungsbeispielen näher erläutert:

Es zeigen:
- Fig. 1: schematisch eine Seitenansicht einer landwirtschaftlichen Maschine mit einer Stelleinrichtung;
- Fig. 2: einen Schaltplan einer hydraulischen Steuerung zur Ansteuerung der Stelleinrichtung; und
- Fig. 3: einen Schaltplan einer hydraulischen Steuerung zur Ansteuerung der Stelleinrichtung gemäß einer zweiten Ausführungsform.

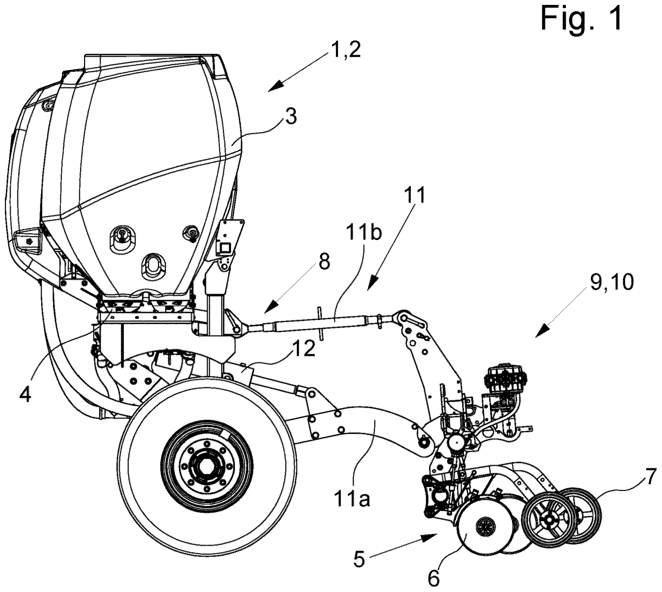

In Fig. 1 ist schematisch eine Seitenansicht einer landwirtschaftlichen Maschine 1 mit einer Stelleinrichtung 8 dargestellt. Die landwirtschaftliche Maschine 1 ist beispielhaft in dem in Fig. 1 gezeigten Ausführungsbeispiel als eine Sämaschine 2 ausgeführt. Die Sämaschine 2 umfasst einen Behälter 3 zur Aufnahme von Saatgut oder Dünger sowie eine darunter angeordnete Dosiervorrichtung 4. Die Sämaschine 2 ist dazu eingerichtet, unmittelbar an ein - nicht dargestelltes - landwirtschaftlichen Arbeitsfahrzeug angeordnet, angebaut oder angehängt zu werden. Das landwirtschaftliche Arbeitsfahrzeug trägt oder bewegt die Sämaschine 2 und stellt den Betrieb der Sämaschine 2 unter anderem durch eine Anbindung an ein Hydrauliksystem sowie ein elektrisches Bordnetz des Arbeitsfahrzeugs sicher. Alternativ kann die Sämaschine 2 auf Bodenbearbeitungsgeräte aufgesattelt werden, die bereits an das landwirtschaftliche Arbeitsfahrzeug angeschlossen, angeordnet, angebaut oder angehängt sind.

Dem Behälter 3 und der Dosiervorrichtung 4 nachgeordnet ist ein Scharsystem 5 vorgesehen. Im dargestellten Ausführungsbeispiel ist das Scharsystem 5 als parallelogrammartig geführte Doppelscheibenschar 6 mit Tiefenführungsrollen 7 ausgebildet. Das Scharsystem 5 weist zumindest eines oder mehrere, vorzugsweise zwei Gerätesegmente 9, 10 auf, die durch die Stelleinrichtung 8 aus einer ersten Position, ihrer Betriebsstellung oder Arbeitsposition, in eine - nicht dargestellte - zweite Position, ihre ausgehobene Stellung wie beispielsweise eine Vorgewendeposition, überführbar sind. Zugleich kann über die Stelleinrichtung eine Kraft auf die Gerätesegmente 6, 7 bzw. das Scharsystem ausgeübt werden, mit welcher diese in der ersten Position, ihrer Betriebsstellung oder Arbeitsposition belastet oder entlastet werden. Damit kann der Schardruck variiert oder geregelt werden. Die Doppelscheibenschar 6 mit den Tiefenführungsrollen 7 bilden Komponenten der Gerätesegmente 9, 10. Die Gerätesegmente 9, 10 sind an einem unteren Träger 11a und einem oberen Träger 11b einer Parallelogrammführung 11 schwenkbar angelenkt. Die Stelleinrichtung 8 ist als zumindest ein Hydraulikzylinder 12 ausgeführt. Im dargestellten Ausführungsbeispiel wirkt der zumindest eine Hydraulikzylinder 12 auf den unteren Träger 11a der Parallelogrammführung 11. Der zumindest eine Hydraulikzylinder 12 stützt sich mit einem Ende am Rahmen der Sämaschine 2 ab. Der zumindest eine Hydraulikzylinder 12 ist als doppeltwirkender Hydraulikzylinder ausgeführt. Zur Versorgung des Hydraulikzylinders 12 mit einem Hydraulikfluid sind in dem Arbeitsfahrzeug zugewandten Bereich Hydraulikanschlüsse angeordnet, durch welche die Sämaschine 2 mit einem Hydrauliksystem des Arbeitsfahrzeugs verbindbar ist.

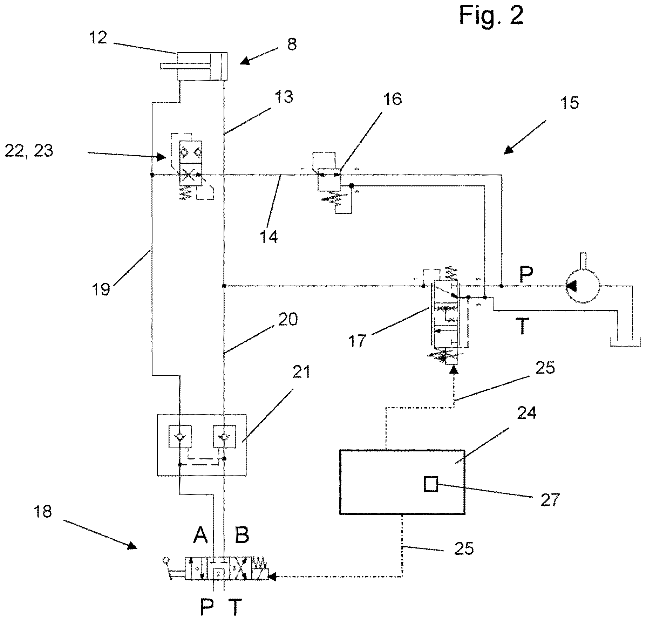

In Fig. 2 ist ein Schaltplan einer hydraulischen Steuerung zur Ansteuerung der Stelleinrichtung 8 dargestellt. Die Stelleinrichtung 8 ist durch Leitungen 13, 14 mit einer Regeleinheit 15 hydraulisch verbunden ist, mit welcher zur Beaufschlagung der Stelleinrichtung 8 ein erster hydraulischer Druck einstellbar und/oder ein erster Volumenstrom zu- oder abführbar ist, mit dem die Stelleinrichtung 8 in die erste Position überführbar und/oder haltbar ist. In der ersten Position, der Betriebsstellung oder Arbeitsposition, befindet sich das Scharsystem 5 mit dem Boden in Eingriff. Dabei wird die Stelleinrichtung 8 respektive der zumindest eine Hydraulikzylinder 12 in der ersten Position durch die Regeleinheit 15 entsprechend der Gewichtskraft bzw. Auflagedruck auf den Boden des Scharsystems 5 bzw. der durch die Stelleinrichtung 8 zu betätigenden Gerätesegmente 9, 10 angesteuert oder geregelt.

Hierzu weist die Regeleinheit 15 zwei Druckbegrenzungsventile 16, 17 auf. Das Druckbegrenzungsventil 16 verbindet die Ringkolbenseite des Hydraulikzylinders 12 in Abhängigkeit von der Schaltstellung des Druckbegrenzungsventils 16 mit einer Pumpe P oder einem vorzugsweise drucklosen Reservoir T. Das Druckbegrenzungsventil 17 verbindet die Kolbenseite des Hydraulikzylinders 12 in Abhängigkeit von der Schaltstellung des Druckbegrenzungsventils 17 mit einer Pumpe P oder einem vorzugsweise drucklosen Reservoir T. Das Druckbegrenzungsventil 16 ist auf die Gewichtskraft Scharsystems 5 bzw. der durch die Stelleinrichtung 8 zu betätigenden Gerätesegmente 9, 10 eingestellt und regelt den auf der Ringkolbenseite des Hydraulikzylinders 12 eingestellten Druck zur Pumpe P oder zum vorzugsweise drucklosen Reservoir T. Die Pumpe P und das Reservoir T können an der Sämaschine 2 vorgesehen oder vorzugsweise Teil des Hydrauliksystems des Arbeitsfahrzeugs sein.

Die Stelleinrichtung 8 ist zudem mit einer Betätigungseinheit 18 hydraulisch verbunden. Hierzu sind zumindest die Leitung 19 und vorzugsweise auch die Leitung 20 oder umgekehrt vorgesehen, welche die Ringkolbenseite bzw. die Kolbenseite des Hydraulikzylinders 12 mit Hydraulikanschlüssen A bzw. B der Betätigungseinheit 18 verbinden. Die Betätigungseinheit 18 wird im dargestellten Ausführungsbeispiel von dem Hydrauliksystem des Arbeitsfahrzeugs gespeist. Mittels der Betätigungseinheit 18 ist zur Beaufschlagung der Stelleinrichtung 8 ein zweiter hydraulischer Druck einstellbar und/oder ein zweiter Volumenstrom zur Übersteuerung der Regeleinheit 15 zu- oder abführbar, mit dem die Stelleinrichtung 8 in die zweite Position überführbar und haltbar ist. Eine Rückschlagventilanordnung 21 zwischen der Stelleinrichtung 8 und den Hydraulikanschlüssen A und B der Betätigungseinheit 18 verhindert ein Abfließen des Hydraulikmediums. Die Rückschlagventilanordnung 21 umfasst zwei entsperrbare Rückschlagventile, die ein ungeplantes Abfließen bzw. Überströmen des Hydraulikmediums von der Regeleinheit 15 in Betätigungseinheit 18 verhindern oder begrenzen.

Zwischen der hydraulischen Verbindung durch die Leitung 14 ist zwischen der Stelleinrichtung 8 und der Regeleinheit 15 ein Sicherungsmittel 22 mit einer einen hydraulischen Druck oder einen Volumenstrom begrenzenden oder blockierenden Wirkung angeordnet. Das zwischen der Ringkolbenseite des Hydraulikzylinders 12 und dem Druckbegrenzungsventil 16 in der Leitung 14 angeordnete Sicherungsmittel 22 ist gemäß der dargestellten Ausführungsform als ein Leitungsbruchsicherungsventil 23 ausgebildet. Die begrenzende oder blockierende Wirkung des Sicherungsmittels 22 tritt bei Betätigung der Betätigungseinheit 18 ein oder ist dadurch aktivierbar. Eine Begrenzung des Volumenstromes im Sicherungsmittel 22 bzw. ein Schwellwert für einen Volumenstrom des Leitungsbruchsicherungsventils 23 ist derart eingestellt, dass der erste Volumenstrom, der von der Regeleinheit 15 zur Aufrechterhaltung oder Regelung der ersten Position bereitgestellt wird, ungehindert zu- oder abgeführt werden kann.

Der Maschine 1 ist eine Steuereinheit 24 zugeordnet, welche zumindest der Ansteuerung der der Regeleinheit 15 dient. Bevorzugt kann die Steuereinheit 24 dazu eingerichtet sein, auch die Betätigungseinheit 18 anzusteuern. Insbesondere können durch die Steuereinheit 24 Einstellwerte für die Druckbegrenzungsventile 16, 17 eingestellt werden. Die Steuereinheit 24 kann an der Maschine 1 oder auf dem Arbeitsfahrzeug angeordnet sein. Durch eine Eingabe an der Steuereinheit 24 kann ein Bediener des Arbeitsfahrzeugs respektive der Maschine 1 zudem einen Steuerbefehl generieren, um die Stelleinrichtung 8 aus ihrer ersten Position in die zweite Position zu überführen. Hierzu wird über den Anschluss A die Ringkolbenseite des Hydraulikzylinders 12 mit dem zweiten Druck bzw. dem zweiten Volumenstrom beaufschlagt, so dass das Hydraulikmedium auf der Kolbenseite des Hydraulikzylinders 12 über das Druckbegrenzungsventil 17 in das Reservoir T abfließt. Die Steuereinheit 24 ist vorzugsweise durch ein Bussystem 25 oder andere Signalleitungen mit dem Arbeitsfahrzeug und/oder der Maschine 1 signaltechnisch verbunden. In einer einfachen Version wird die Betätigungseinheit 18 jedoch direkt durch den Bediener des landwirtschaftlichen Arbeitsfahrzeuges betätigt.

Die Betätigung der Betätigungseinheit 18 führt dazu, dass über den Anschluss A mit dem zweiten Volumenstrom bzw. mit dem zweiten Druck ein Hydraulikmedium zugeführt wird. Überschreitet der zweite Volumenstrom den begrenzten Volumenstrom im Sicherungsmittel 22 bzw. den Schwellwert des Leitungsbruchsicherungsventils 23, führt dies dazu, dass die hydraulische Verbindung zwischen der Ringkolbenseite des Hydraulikzylinders 12 und dem Druckbegrenzungsventil 16 unterbrochen oder blockiert ist. Dadurch wird die zweite Position der Stelleinrichtung 8, in der das durch den zumindest einen Hydraulikzylinder 12 betätigte Gerätesegment 9, 10 ausgehoben ist, abgesichert.

Die Gerätesegmente 9, 10 der Maschine 1 werden solange in der ausgehobenen zweiten Position gehalten, bis durch eine erneute Eingabe an der Steuereinheit 24 oder durch den Bediener direkt zur Betätigung der Betätigungseinheit 18 ein weiterer Steuerbefehl generiert oder erzeugt wird, um die Stelleinrichtung 8 aus ihrer zweiten Position in die erste Position zu überführen. Hierzu wird der Anschluss B der Betätigungseinheit 18 angesteuert und Anschluss A geöffnet, um die Kolbenseite des Hydraulikzylinders 12 mit dem zweiten Druck bzw. dem zweiten Volumenstrom zu beaufschlagen. Mit dem Erreichen der ersten Position der Stelleinrichtung 8 stoppt der Zufluss über den Anschluss B, so dass der zweite Volumenstrom unter den Schwellwert des Leitungsbruchsicherungsventils 23 absinkt. Das Leitungsbruchsicherungsventil 23 öffnet, so dass die Regelung zur Einhaltung der ersten Position der Stelleinrichtung 8 wieder durch die Regeleinheit 15 erfolgt.

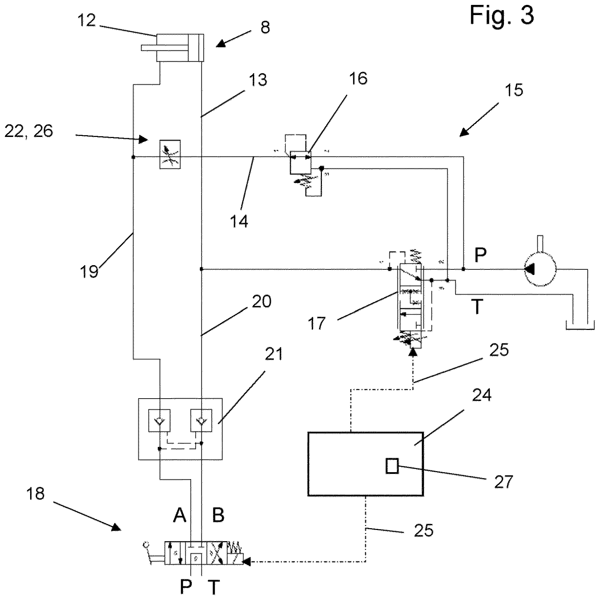

Die Darstellung in Fig. 3 zeigt einen Schaltplan einer hydraulischen Steuerung zur Ansteuerung der Stelleinrichtung 8 gemäß einer zweiten Ausführungsform. Für funktionsgleiche oder funktionsidentische Bauteile wurden die Bezugszeichen beibehalten. Die zweite Ausführungsform der hydraulischen Steuerung unterscheidet sich von der ersten Ausführungsform der hydraulischen Steuerung durch die Ausgestaltung des Sicherungsmittels 22. Gemäß der zweiten Ausführungsform ist das Sicherungsmittel 22 als Drosselrückschlagventil oder einstellbare Drossel 26 ausgebildet. Durch das als Drosselrückschlagventil oder einstellbare Drossel 26 ausgebildete Sicherungsmittel 22 ist eine Querschnittverringerung in der Leitung 14 einstellbar, so dass sich bei Betätigung der Betätigungseinheit 18 zur Ansteuerung des Anschlusses A der vor der einstellbaren Drossel 26 einstellende Staudruck ausreicht, um die Stelleinrichtung 8 respektive den Hydraulikzylinder 12 auf der Ringkolbenseite mit einem zweiten Druck bzw. einem zweiten Volumenstrom zu beaufschlagen, um die Stelleinrichtung 8 in die zweite Position zu überführen.

Um eine Aufrechterhaltung der zweiten Position zu gewährleisten, kann im einfachsten Fall vorgesehen sein, dass der Bediener die Eingabe an der Steuereinheit 24 oder direkt an der Betätigungseinheit 18 zur Ansteuerung des Anschlusses A für die Dauer der Vorgewendefahrt aufrechterhält. Dies kann beispielsweise durch eine dauerhafte Betätigung eines Eingabeelementes 27 an der Steuereinheit 24 oder der Betätigungseinheit 18 erfolgen. Das Eingabeelement 27 kann beispielsweise als Schalter, Hebel, berührungssensitives Feld eines Touchscreens oder dergleichen ausgebildet sein.

Alternativ kann die Steuereinheit 24 dazu eingerichtet sein, dass nach der Eingabe des Bedieners durch die Betätigung des Eingabeelementes 27 die Ansteuerung des Anschlusses A selbsttätig aufrechterhalten wird, bis es zu einer erneuten Eingabe an der Steuereinheit 24 durch den Bediener kommt, um die Ansteuerung des Anschlusses B der Betätigungseinheit 18 zu initiieren. Durch die Ansteuerung des Anschlusses B der Betätigungseinheit 18 wird die Stelleinrichtung 8 angesteuert, nach dem Durchfahren des Vorgewendes die Gerätesegmente 9, 10 von der zweiten Position in die erste Position zu überführen. Denkbar ist aber auch, für die Ansteuerung der Anschlüsse A und B der Betätigungseinheit 18 jeweils separate und /oder direkte Eingabeelemente vorzusehen.

Eine weitere alternative - nicht dargestellte - Ausführungsform des Sicherungsmittels 22 kann darin bestehen, den Leitungsquerschnitt eines Teilabschnitts der Leitung 14 zwischen der Ringkolbenseite des Hydraulikzylinders 12 und dem Druckbegrenzungsventils 16 so zu dimensionieren, dass ein vergleichbarer Effekt des als einstellbare Drossel 26 oder als Drosselrückschlagventil ausgebildeten Sicherungsmittels 22 zu erhalten. Das Sicherungsmittel 22 ist dabei als hydraulische Drossel ausgebildet. Weiterhin kann eine -nicht dargestellte- Überwachungseinrichtung mit der Steuereinheit 24 verbunden sein, welche die Stellung der Parallelogrammführung 11 oder des Scharsystems 5 überwacht und bei Erreichen der zweiten Stellung, beispielsweise einer ausgehobenen oder Vorgewendeposition, die Ansteuerung oder Regelung der Regeleinheit 15 aussetzt oder unterbricht. Die Funktion der Regeleinheit 15 setzt bei Erreichen der ersten Position, nämlich der Betriebsstellung oder Arbeitsposition, automatisch oder nach Freigabe durch die Steuereinheit 24 wieder ein.

### Bezugszeichenliste

| | | | |
|---|---|---|---|
| 1 | Landwirtschaftliche Maschine | A | Anschluss |
| 2 | Sämaschine | B | Anschluss |
| 3 | Behälter | P | Pumpe |
| 4 | Dosiervorrichtung | T | Reservoir |
| 5 | Scharsystem | | |
| 6 | Doppelscheibenschar | | |
| 7 | Tiefenführungsrollen | | |
| 8 | Stelleinrichtung | | |
| 9 | Gerätesegment | | |
| 10 | Gerätesegment | | |
| 11 | Parallelogrammführung | | |
| 11a | Unterer Träger | | |
| 11b | Oberer Träger | | |
| 12 | Hydraulikzylinder | | |
| 13 | Leitung | | |
| 14 | Leitung | | |
| 15 | Regeleinheit | | |
| 16 | Druckbegrenzungsventil | | |
| 17 | Druckbegrenzungsventil | | |
| 18 | Betätigungseinheit | | |
| 19 | Leitung | | |
| 20 | Leitung | | |
| 21 | Rückschlagventilanordnung | | |
| 22 | Sicherungsmittel | | |
| 23 | Leitungsbruchsicherungsventil | | |
| 24 | Steuereinheit | | |
| 25 | Bussystem | | |
| 26 | Einstellbare Drossel | | |
| 27 | Eingabeelement | | |

## Patentansprüche

1. Landwirtschaftliche Maschine (1, 2), mit zumindest einer hydraulischen Stelleinrichtung (8),
- wobei die Stelleinrichtung (8) zumindest einen Hydraulikzylinder (12) umfasst,
- wobei die Stelleinrichtung (8) mit einer Regeleinheit (15) hydraulisch verbunden ist, mit welcher zur Beaufschlagung der Stelleinrichtung (8) ein erster hydraulischer Druck einstellbar und/oder ein erster Volumenstrom zu- oder abführbar ist, mit dem die Stelleinrichtung (8) in eine erste Position überführbar und haltbar ist,
- wobei die Stelleinrichtung (8) mit einer Betätigungseinheit (18) hydraulisch verbunden ist, mit welcher zur Beaufschlagung der Stelleinrichtung (8) ein zweiter hydraulischer Druck einstellbar und/oder ein zweiter Volumenstrom zur Übersteuerung der Regeleinheit (15) zu- oder abführbar ist, mit dem die Stelleinrichtung (8) in eine zweite Position überführbar und haltbar ist,
**dadurch gekennzeichnet,**
**dass** in der hydraulischen Verbindung zwischen Stelleinrichtung (8) und Regeleinheit (15) ein Sicherungsmittel (22), das als Leitungsbruchsicherungsventil (23) ausgebildet ist, mit einer einen hydraulischen Druck oder einen Volumenstrom begrenzenden oder blockierenden Wirkung angeordnet ist, wobei die begrenzende oder blockierende Wirkung des Sicherungsmittels (22) bei Betätigung der Betätigungseinheit (18) eintritt oder aktivierbar ist.

2. Landwirtschaftliche Maschine (1, 2) nach Anspruch 1, **dadurch gekennzeichnet, dass** der durch die Regeleinheit (15) zur Beaufschlagung der Stelleinrichtung (8) eingestellte erste Druck und/oder der erste zu- oder abgeführte Volumenstrom derart bemessen ist, dass dieser den durch die Betätigungseinheit (18) zur Beaufschlagung der Stelleinrichtung (8) eingestellten zweiten Druck und/oder den zu- oder abgeführten zweiten Volumenstrom unterschreitet.

3. Landwirtschaftliche Maschine (1, 2) nach einem der vorangehenden Ansprüche, **dadurch gekennzeichnet, dass** die Regeleinheit (15) zumindest mittelbar mit einer hydraulischen Pumpe (P) und einem Reservoir (T) zur kontinuierlichen Beaufschlagung mit dem ersten Druck und/oder der Zu- und Abfuhr des ersten Volumenstromes verbunden ist.

4. Landwirtschaftliche Maschine (1, 2) nach einem der vorangehenden Ansprüche, **dadurch gekennzeichnet, dass** die Betätigungseinheit (18) zumindest mittelbar mit einer hydraulischen Pumpe (P) und einem Reservoir (T) zur manuellen Beaufschlagung mit dem zweiten Druck und/oder der Zu- und Abfuhr des zweiten Volumenstromes verbunden ist.

5. Landwirtschaftliche Maschine (1, 2) nach einem der vorangehenden Ansprüche, **dadurch gekennzeichnet, dass** der Maschine (1, 2) eine Steuereinheit (24) zugeordnet ist, welche der Ansteuerung zumindest der Betätigungseinheit (18) dient.

6. Landwirtschaftliche Maschine (1, 2) nach einem der vorangehenden Ansprüche, **dadurch gekennzeichnet, dass** die zumindest eine Stelleinrichtung (8) zum Überführen zumindest eines an der landwirtschaftlichen Maschine (1, 2) angeordneten Gerätesegmentes (9, 10) zwischen einer Betriebsstellung und einer ausgehobenen Stellung eingerichtet ist.

7. Verfahren zum Betreiben einer landwirtschaftlichen Maschine (1, 2), mit zumindest einer hydraulischen Stelleinrichtung (8) zum Überführen wenigstens eines an der landwirtschaftliche Maschine (1, 2) angeordneten Gerätesegmentes (9, 10) von einer ersten Position in eine zweite Position,
- wobei die Stelleinrichtung (8) zumindest einen Hydraulikzylinder (12) umfasst,
- wobei die Stelleinrichtung (8) mit einer Regeleinheit (15) hydraulisch verbunden ist, mit welcher zur Beaufschlagung der Stelleinrichtung (8) ein erster hydraulischer Druck eingestellt und/oder ein erster Volumenstrom zu- oder abgeführt wird, mit dem die Stelleinrichtung (8) in die erste Position überführt wird,
- wobei die Stelleinrichtung (8) zudem mit einer Betätigungseinheit (18) hydraulisch verbunden ist, mit welcher zur Beaufschlagung der Stelleinrichtung (8) ein zweiter hydraulischer Druck eingestellt und/oder ein zweiter Volumenstrom zur Übersteuerung der Regeleinheit (15) zu- oder abgeführt wird, mit dem die Stelleinrichtung (8) in die zweite Position überführt wird,
**dadurch gekennzeichnet,**
**dass** bei einer Betätigung der Betätigungseinheit (18) ein in der hydraulischen Verbindung zwischen Stelleinrichtung (8) und Regeleinheit (15) angeordnetes Sicherungsmittel (22), das als Leitungsbruchsicherungsventil (23) ausgeführt ist, und welches ein hydraulischer Druck oder ein Volumenstrom begrenzt oder blockiert wird, aktiviert wird, wobei beim Betrieb der Maschine (1, 2) das Sicherungsmittel (22) bei Volumenströmen unterhalb eines Schwellwertes in einer geöffneten Stellung gehalten wird und beim Ausheben des Gerätesegmentes (9, 10) die hydraulische Verbindung der Regeleinheit (15) mit einer Pumpe (P) oder einem Reservoir (T) durch das Sicherungsmittel (22) begrenzt oder unterbrochen wird.

8. Verfahren nach Anspruch 7, **dadurch gekennzeichnet, dass** durch eine der Maschine (1, 2) zugeordnete Steuereinheit (24) die Betätigungseinheit (18) angesteuert wird, um das Gerätesegment (9, 10) zwischen der ersten Position und der zweiten Position zu überführen.

## Claims

1. An agricultural machine (1, 2), having at least one hydraulic adjusting device (8),
- wherein the adjusting device (8) includes at least one hydraulic cylinder (12),
- wherein the adjusting device (8) is hydraulically connected to a regulating unit (15), with which impinging on the adjusting device (8) a first hydraulic pressure is adjustable and/or a first volumetric flow suppliable or dischargeable, with which the adjusting device (8) is transferrable and maintainable in a first position,
- wherein the adjusting device (8) is hydraulically connected to an actuation unit (18), with which impinging on the adjusting device (8) a second hydraulic pressure is adjustable and/or a second volumetric flow for overriding the regulating unit (15) is suppliable or dischargeable, with which the adjusting device (8) is transferrable and maintainable into/in a second position,
**characterised**
**in that** in the hydraulic connection between adjusting device (8) and regulating unit (15) a securing means (22), which is configured as line breakage safety valve (23), having an effect limiting or blocking a hydraulic pressure or a volumetric flow is arranged, wherein the limiting or blocking effect of the securing means (22) occurs or is activatable upon actuation of the actuation unit (18).

2. The agricultural machine (1, 2) according to Claim 1,
**characterised**
**in that** the first pressure and/or the first supplied or discharged volumetric flow adjusted by the regulating unit (15) impinging on the adjusting device (8) is dimensioned in such a manner that the same undershoots the second pressure and/or the supplied or discharged second volumetric flow adjusted by the actuation unit (18) impinging on the adjusting device (8).

3. The agricultural machine (1, 2) according to any one of the preceding claims,
**characterised**
**in that** the regulating unit (15) is at least indirectly connected to a hydraulic pump (P) and a reservoir (T) for the continuous impingement with the first pressure and/or the supply and discharge of the first volumetric flow.

4. The agricultural machine (1, 2) according to any one of the preceding claims,
**characterised**
**in that** the actuation unit (18) is at least indirectly connected to a hydraulic pump (P) and a reservoir (T) for the manual impingement with the second pressure and/or the supply and discharge of the second volumetric flow.

5. The agricultural machine (1, 2) according to any one of the preceding claims,
**characterised**
**in that** the machine (1, 2) is assigned a control unit (24), which serves for controlling at least the actuation unit (18).

6. The agricultural machine (1, 2) according to any one of the preceding claims,
**characterised**
**in that** the at least one adjusting device (8) is equipped for transferring at least one implement segment (9, 10) arranged on the agricultural machine (1, 2) between an operating position and a lifted position.

7. A method for operating an agricultural machine (1, 2), having at least one hydraulic adjusting device (8) for transferring at least one implement segment (9, 10) arranged on the agricultural machine (1, 2) from a first position into a second position,
- wherein the adjusting device (8) includes at least one hydraulic cylinder (12),
- wherein the adjusting device (8) is hydraulically connected to a regulating unit (15), with which impinging on the adjusting device (8) a first hydraulic pressure is adjusted and/or a volumetric flow supplied or discharged, with which the adjusting device (8) is transferred into the first position,
- wherein the adjusting device (8) is additionally hydraulically connected to an actuation unit (18), with which for impinging on the adjusting device (8) a second hydraulic pressure is adjusted and/or a second volumetric flow for overriding the regulating unit (15) is supplied or discharged, with which the adjusting device (8) is transferred into the second position,
**characterised**
**in that** upon actuation of the actuation unit (18) a securing means (22) arranged in the hydraulic connection between adjusting device (8) and regulating unit (15), through which a hydraulic pressure or a volumetric flow is limited or blocked, is activated, wherein during the operation of the machine (1, 2) the securing means (22) with volumetric flows below a threshold value is held in an opened position and on lifting the implement segment (9, 10) the hydraulic connection of the regulating unit (15) to a pump (P) or a reservoir (T) is limited or interrupted by the securing means (22).

8. The method according to Claim 7,
**characterised**
**in that** the actuation unit (18) is controlled by a control unit (24) assigned to the machine (1, 2) in order to transfer the implement segment (9, 10) between the first position and the second position.

## Revendications

1. Machine agricole (1, 2), pourvue d'au moins un dispositif de réglage (8) hydraulique,
- le dispositif de réglage (8) comprenant au moins un vérin hydraulique (12),
- le dispositif de réglage (8) étant hydrauliquement relié avec une unité de régulation (15) à l'aide de laquelle, pour solliciter le dispositif de réglage (8), une première pression hydraulique est réglable et / ou un premier débit volumétrique à l'aide duquel le dispositif de réglage (8) peut être passé et maintenu dans une première position peut être alimenté ou évacué,
- le dispositif de réglage (8) étant hydrauliquement relié avec une unité d'actionnement (18), à l'aide de laquelle, pour solliciter le dispositif de réglage (8), une deuxième pression est réglable et / ou un deuxième débit volumétrique destiné à saturer l'unité de régulation (15), à l'aide duquel le dispositif de réglage (8) peut être passé et maintenu dans une deuxième position peut être alimenté ou évacué,
**caractérisée**
**en ce que** dans la liaison hydraulique entre le dispositif de réglage (8) et l'unité de régulation (15) est placé un moyen de sécurité (22), qui est conçu sous la forme d'une soupape de sécurité (23) de rupture de conduite, ayant pour effet de limiter ou de bloquer une pression hydraulique ou un débit volumétrique, l'effet de limitation ou de blocage du moyen de sécurité (22) intervenant ou étant activable lors de l'actionnement de l'unité d'actionnement (18).

2. Machine agricole (1, 2) selon la revendication 1, **caractérisée en ce que** la première pression réglée par l'unité de régulation (15) pour solliciter le dispositif de réglage (8) et / ou le premier débit volumétrique alimenté ou évacué est dimensionné(e) de sorte à ne pas atteindre la deuxième pression réglée par l'unité d'actionnement (18) pour solliciter le dispositif de réglage (8) et / ou le deuxième débit volumétrique alimenté ou évacué.

3. Machine agricole (1, 2) selon l'une quelconque des revendications précédentes, **caractérisée en ce que** l'unité de régulation (15) est reliée au moins indirectement avec une pompe hydraulique (P) et avec un réservoir (T), pour la sollicitation continue avec la première pression et / ou pour l'alimentation et l'évacuation du premier débit volumétrique.

4. Machine agricole (1, 2) selon l'une quelconque des revendications précédentes, **caractérisée en ce que** l'unité d'actionnement (18) est reliée au moins indirectement avec une pompe hydraulique (P) et avec un réservoir (T), pour la sollicitation manuelle avec le deuxième pression et / ou pour l'alimentation et l'évacuation du deuxième débit volumétrique.

5. Machine agricole (1, 2) selon l'une quelconque des revendications précédentes, **caractérisée en ce qu'**à la machine (1, 2) est associée une unité de commande (24), laquelle sert à piloter au moins l'unité d'actionnement (18) .

6. Machine agricole (1, 2) selon l'une quelconque des revendications précédentes, **caractérisée en ce que** l'au moins un dispositif de réglage (8) est configuré pour faire passer au moins un segment d'appareil (9, 10) placé sur la machine agricole (1, 2) entre une position de fonctionnement et une position relevée.

7. Procédé opérationnel d'une machine agricole (1, 2), à l'aide d'au moins un dispositif de réglage (8) hydraulique, destiné à faire passer au moins un segment d'appareil (9, 10) placé sur la machine agricole (1, 2) d'une première position dans une deuxième position,
- le dispositif de réglage (8) comprenant au moins un vérin hydraulique (12),
- le dispositif de réglage (8) étant hydrauliquement relié avec une unité de régulation (15), à l'aide de laquelle, pour solliciter le dispositif de réglage (8) une première pression est réglée et / ou un premier débit volumétrique, par lequel le dispositif de réglage (8) passe dans la première position est alimenté ou évacué,
- le dispositif de réglage (8) étant par ailleurs relié hydrauliquement avec une unité d'actionnement (18), à l'aide de laquelle, pour solliciter le dispositif de réglage (8), une deuxième pression est réglée et / ou un deuxième débit volumétrique destiné à saturer l'unité de régulation (15), par lequel le dispositif de réglage (8) passe dans la deuxième position est alimenté ou évacué
**caractérisé,**
**en ce que** lors d'un actionnement de l'unité d'actionnement (18), un moyen de sécurité (22) placé dans la liaison hydraulique entre le dispositif de réglage (8) et l'unité de régulation (15), qui est réalisé sous la forme d'une soupape de sécurité (23) de rupture de conduite et par lequel une pression hydraulique ou un débit volumétrique est limité(e) ou bloqué(e) est activé, lors du fonctionnement de la machine (1, 2), lorsque les débits volumétriques sont inférieurs à une valeur seuil, le moyen de sécurité (22) étant maintenu dans une position ouverte et lorsque le segment d'appareil (9, 10) se relève, la liaison hydraulique de l'unité de régulation (15) avec une pompe (P) ou avec un réservoir (T) étant limitée ou interrompue par le moyen de sécurité (22)

8. Procédé selon la revendication 7, **caractérisée en ce que** par une unité de commande (24) associée à la machine (1, 2) l'unité d'actionnement (18) est pilotée pour faire passer le segment d'appareil (9, 10) entre la première position et la deuxième position.
